# EUROPÄISCHE PATENTSCHRIFT

(11) **EP 1 845 579 B1**
(45) Veröffentlichungstag und Bekanntmachung des Hinweises auf die Patenterteilung: **13.10.2010**
(21) Anmeldenummer: 07104975.3
(22) Anmeldetag: 27.03.2007
(51) Int. Cl.: H01M 8/06, H01M 8/04, B01J 38/12, C01B 3/38, H01M 8/12, H01M 8/24

(54) **Brennstoffzellensystem und zugehöriges Betriebsverfahren**
Fuel cell system and appropriate operating method
Système de pile à combustible et procédé de fonctionnement correspondant

(30) Priorität: 12.04.2006 DE 102006017614
(43) Veröffentlichungstag der Anmeldung: 17.10.2007
(73) Patentinhaber: J. Eberspächer GmbH & Co. KG, 73730 Esslingen (DE)
(72) Erfinder: Kaupert, Andreas, 73730, Esslingen (DE); Reiners, Karsten, 73732, Esslingen (DE)
(74) Vertreter: BRP Renaud & Partner

(56) Entgegenhaltungen:
- EP-A- 1 198 020
- DE-A1- 10 127 199
- US-A1- 2003 093 950
- US-B1- 6 608 463

## Beschreibung

Die vorliegende Erfindung betrifft ein Brennstoffzellensystem, insbesondere für ein Kraftfahrzeug, mit den Merkmalen des Oberbegriffs des Anspruchs 1. Die Erfindung betrifft außerdem ein Verfahren zum Ausschalten eines derartigen Brennstoffzellensystems.

Ein derartiges Brennstoffzellensystem ist beispielsweise aus der DE 10 2005 001 361 bekannt und umfasst eine Brennstoffzelle zur Stromerzeugung aus Oxidatorgas und Brenngas, die einen Anodeneingang, einen Anodenausgang, einen Kathodeneingang, einen Kathodenausgang und wenigstens einen Stromanschluss aufweist, sowie einen Reformer zur Brenngaserzeugung aus Oxidatorgas und Kraftstoff, der einen Kraftstoffeingang, einen Oxidatoreingang und einen Brenngasausgang aufweist. Dabei verbindet eine Brenngasleitung den Brenngasausgang mit dem Anodeneingang. Des Weiteren ist eine Brennstoffzellenabgasleitung vorgesehen, die eingangsseitig mit einer Anodenabgasleitung, die an den Anodenausgang der Brennstoffzelle angeschlossen ist, und mit einer Kathodenabgasleitung verbunden ist, die an den Kathodenausgang der Brennstoffzelle angeschlossen ist.

Weitere Brennstoffzellensysteme sind beispielsweise aus der DE 103 15 255 A1 und aus der DE 10 2004 002 337 A1 bekannt.

Der Reformer derartiger Brennstoffzellensysteme generiert ein wasserstoffhaltiges Reformat oder Brenngas, wozu er beispielsweise mit Hilfe eines Katalysators ein fettes Gemisch aus Oxidatorgas und Kraftstoff mittels partieller Oxidation umsetzt. Hierbei können sich Partikel, insbesondere Rußpartikel, am oder im Katalysator ablagern. Diese Partikel- oder Rußablagerungen fallen verstärkt an, wenn das Brennstoffzellensystem mit einer Anodenabgasrückführung arbeitet, bei der Anodenabgas erneut dem Reformer eingangsseitig zur Gemischbildung zugeführt wird. Die zunehmende Partikel- bzw. Rußbeladung erhöht den Durchströmungswiderstand des Katalysators und beeinträchtigt die Funktionsfähigkeit des Reformers und somit des gesamten Brennstoffzellensystems.

Bei Partikelfiltern oder Rußfiltern in Abgasanlagen von Brennkraftmaschinen stellt sich ein ähnliches Problem. Zur Regeneration des Partikelfilters ist es bekannt, die Partikel- bzw. Rußbeladung während des Betriebs der Brennkraftmaschine abzubrennen. Ein Abbrennen der Partikelbeladung des Katalysators im Reformer des Brennstoffzellensystems während des Betriebs des Brennstoffzellensystems scheidet aus, da die dabei auftretenden Temperaturen die Anodenseite der Brennstoffzelle zerstören würden und die dabei entstehenden Reaktionsprodukte den Reformerprozess sowie den Brennstoffzellenprozess erheblich stören würden.

Die vorliegende Erfindung beschäftigt sich mit dem Problem, für ein Brennstoffzellensystem einen Weg zur Regeneration des Reformers bzw. des Katalysators aufzuzeigen, bei dem die Gefahr einer Beschädigung der Anodenseite der Brennstoffzelle reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Brennstoffzellensystem mit einer Bypassleitung auszustatten, welche die Brenngasleitung unter Umgehung der Brennstoffzelle mit der Brennstoffzellenabgasleitung verbindet. Hierdurch ist es möglich, während eines Regenerationsprozesses zum Regenieren des Reformers bzw. des darin angeordneten Katalysators die dabei entstehenden Regenerationsprodukte nicht durch die Brennstoffzelle, sondern unter Umgehung der Brennstoffzelle durch die Bypassleitung abzuführen. Die Gefahr einer Beschädigung der Anodenseite der Brennstoffzelle durch die Regenerationsprodukte wird dadurch beseitigt oder zumindest erheblich reduziert, da eine Kontaktierung der Regenerationsprodukte mit der Anodenseite weitgehend vermieden wird.

Weitere Brennstoffzellensysteme mit Bypassleitungen sind aus DE 101 27 199 A1, EP 1 198 020 A2 und US 2003/0093450 A1 bekannt.

Zweckmäßig kann in der Bypassleitung ein Bypassventil angeordnet sein, das zum Öffnen und Sperren der Bypassleitung angesteuert werden kann. Hierdurch ist es besonders einfach möglich, die Bypassleitung für den normalen Brenngaserzeugungsbetrieb des Reformers zur Beaufschlagung der Brennstoffzelle mit Brenngas zu sperren und für den Regenerationsprozess zu öffnen. Grundsätzlich kann der Strömungswiderstand zwischen den Anschlussstellen der Bypassleitung durch die Brennstoffzelle und die Brennstoffzellenabgasleitung größer sein als der Strömungswiderstand durch die Bypassleitung, derart, dass die Regenerationsprodukte bei geöffneter Bypassleitung und bei offener Brennstoffzellenabgasleitung dem geringeren Strömungswiderstand folgend im wesentlichen ausschließlich durch die Bypassleitung abströmen. Bei einer anderen Ausführungsform kann jedoch vorgesehen sein, in der Brennstoffzellenabgasleitung stromauf der ausgangsseitigen Anschlussstelle der Bypassleitung ein Abgasventil anzuordnen, das zum Öffnen und Sperren der Brennstoffzellenabgasleitung ansteuerbar ist. Auf diese Weise lässt sich während des Regenerationsprozesses durch Sperren der Brennstoffzellenabgasleitung eine Durchströmung der Brennstoffzelle mit den schädlichen Regenerationsprodukten mit erhöhter Sicherheit vermeiden.

Der Regenerationsprozess kann beispielsweise so ausgestaltet sein, dass der Reformer für die Regeneration des Katalysators mit Oxidatorgas beaufschlagt wird. Bei Erreichen der Brennstoffzellengrenztemperatur in der Brennstoffzelle sind die Temperaturen im Katalysator regelmäßig noch so hoch, dass die Oxidatorzufuhr zum Abbrand der Partikel führt. Alternativ ist es ebenso möglich, die Regeneration dadurch zu realisieren, dass der Reformer als Brenner betrieben wird, das bedeutet, dass dem Reformer Kraftstoff und Oxidatorgas mit Sauerstoffüberschuss zugeführt werden, wodurch sich eine Flamme zum Abbrennen der Partikelbeladung bilden kann.

Vorzugsweise wird der Regenerationsprozess temperaturabhängig gesteuert. Beispielsweise wird die Oxidatorversorgung des Reformers bzw. der Brennerbetrieb des Reformers reduziert und/oder unterbrochen, sobald und solange die Temperatur der Brennstoffzelle die Brennstoffzellengrenztemperatur übersteigt und/oder sobald und solange eine Temperatur des Reformers eine vorbestimmte Reformergrenztemperatur übersteigt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

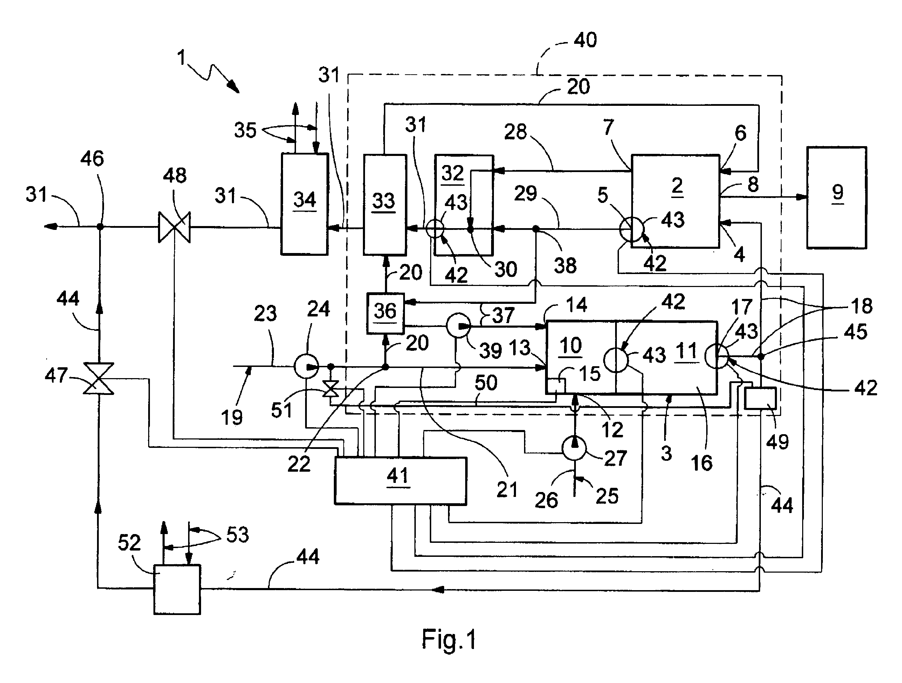

Die einzige Figur 1 zeigt eine schematische, schaltplanartige Prinzipdarstellung eines Brennstoffzellensystems.

Entsprechend Fig. 1 umfasst ein Brennstoffzellensystem 1, das in einem Kraftfahrzeug angeordnet sein kann, zumindest eine Brennstoffzelle 2 und einen Reformer 3. Die Brennstoffzelle 2 dient zur Erzeugung von Strom, den sie in bekannter Weise aus einem Oxidatorgas und einem Brenngas erzeugt. Die Brennstoffzelle 2 kann beispielsweise als Festkörper-Brennstoffzelle (SOFC) und vorzugsweise als Hochtemperatur-Brennstoffzelle ausgebildet sein. Für die Stromerzeugung wird die Brennstoffzelle 2 kathodenseitig mit dem Oxidatorgas versorgt, das beispielsweise durch Luft oder durch reinen Sauerstoff gebildet ist. Außerdem wird die Brennstoffzelle 2 im Betrieb anodenseitig mit dem Brenngas versorgt, das wasserstoffhaltig ist. Dementsprechend weist die Brennstoffzelle 2 einen Anodeneingang 4, einen Anodenausgang 5, einen Kathodeneingang 6, einen Kathodenausgang 7 und zumindest einen elektrischen Anschluss oder Stromabschluss 8 auf. Über den wenigstens einen Stromanschluss 8 ist ein elektrischer Verbraucher 9 an die Brennstoffzelle 2 bzw. an das Brennstoffzellensystem 1 anschließbar.

Bei einem in einem Kraftfahrzeug angeordneten Brennstoffzellensystem 1 handelt es sich beim elektrischen Verbraucher 9 vorzugsweise um solche elektrische Verbraucher 9, die für den normalen Fahrbetrieb des Fahrzeugs nicht erforderlich sind. Vielmehr dienen diese Verbraucher 9 dem Fahrzeugführer zur Komfortsteigerung, wenn das Fahrzeug ruht, also wenn eine Brennkraftmaschine des Fahrzeugs ausgeschaltet ist. Das Brennstoffzellensystem 1 stellt im Fahrzeug demnach eine motorunabhängige Stromversorgung bereit. Verbraucher 9 können beispielsweise sein eine Klimaanlage, ein Fernsehgerät, ein Kühlschrank, eine Kochstelle, ein Mikrowellenherd und das Brennstoffzellensystem 1 selbst.

Der Reformer 3 dient zur Erzeugung des wasserstoffhaltigen Brenngases aus Oxidatorgas, vorzugsweise Luft oder Sauerstoff, und aus Kraftstoff, vorzugsweise Kohlenwasserstoffe. Vorzugsweise wird als Kraftstoff zur Versorgung des Reformers 3 derjenige Kraftstoff verwendet, der in dem mit dem Brennstoffzellensystem 1 ausgestatteten Fahrzeug zur Versorgung einer Brennkraftmaschine ohnehin zur Verfügung steht.

Der Reformer 3 umfasst einen Gemischbildungsabschnitt 10 und unmittelbar daran angrenzend einen Katalysatorabschnitt 11. Im Gemischbildungsabschnitt 10 erfolgt die Bildung eines Gemischs aus Oxidatorgas und Kraftstoff. Gleichzeitig kann der Gemischbildungsabschnitt 10 auch als Verdampfer arbeiten, wenn flüssiger Kraftstoff verwendet wird. Am Gemischbildungsabschnitt 10 sind ein Kraftstoffeingang 12 und ein Oxidatoreingang 13 des Reformers 3 angeordnet. Des Weiteren ist noch ein Anodenabgaseingang 14 vorgesehen, der weiter unten näher erläutert wird. Außerdem enthält der Gemischbildungsabschnitt 10 optional eine Zündeinrichtung 15, die es ermöglicht, den Gemischbildungsabschnitt 10 bzw. den Reformer 3 als Brenner zu betreiben.

Der Katalysatorabschnitt 11 dient zur Umsetzung des vom Gemischbildungsabschnitt 10 bereitgestellten Gemischs in wasserstoffhaltiges Brenngas. Hierzu umfasst der Katalysatorabschnitt 11 einen Katalysator 16 aus einem zur Herstellung eines derartigen Brenngases geeigneten Katalysatormaterial, das z. B. auf ein geeignetes Substrat, z.B. aus Keramik oder Metall, aufgebracht ist. Am Katalysatorabschnitt 11 ist ein Brenngasausgang 17 des Reformers 3 ausgebildet. Der Brenngasausgang 17 ist über eine Brenngasleitung 18 mit dem Anodeneingang 4 verbunden.

Zur Versorgung der Brennstoffzelle 2 und des Reformers 3 mit Oxidatorgas ist eine Oxidatorzuführungseinrichtung 19 vorgesehen, die beispielsweise eine erste Oxidatorleitung 20, die an den Kathodeneingang 6 angeschlossen ist, und eine zweite Oxidatorleitung 21 aufweist, die an den Oxidatoreingang 13 angeschlossen ist. Die beiden Oxidatorleitungen 20, 21 zweigen bei 22 von einer gemeinsamen Oxidatorzuführungsleitung 23 ab, in der ein Gebläse oder eine Pumpe 24 zum Antreiben des Oxidatorgases zur Brennstoffzelle 2 bzw. zum Reformer 3 angeordnet ist.

Zur Versorgung des Reformers 3 mit Kraftstoff ist eine Kraftstoffzuführungseinrichtung 25 vorgesehen, die eine an den Kraftstoffeingang 12 angeschlossene Kraftstoffzuführungsleitung 26 sowie eine darin angeordnete Pumpe 27 aufweist.

An den Kathodenausgang 7 ist eine Kathodenabgasleitung 28 zum Abführen von Kathodenabgas angeschlossen. An den Anodenausgang 5 ist eine Anodenabgasleitung 29 zum Abführen von Anodenabgas angeschlossen. Die Kathodenabgasleitung 28 ist bei 30 mit der Anodenabgasleitung 29 zusammengeführt, die ab dieser Anschlussstelle 30 eine gemeinsame Brennstoffzellenabgasleitung 31 zum Abführen von Anodenabgas und Kathodenabgas bildet. Die Anschlussstelle 30 ist hier innerhalb eines Restgasbrenners 32 angeordnet bzw. sind die Abgasleitungen 28, 29 und 31 an den Restgasbrenner 32 angeschlossen. Der Restgasbrenner 32 dient dazu, Anodenabgas und Kathodenabgas zu verbrennen, um dadurch nicht oder nicht vollständig umgesetzte Reste des Brenngases umzusetzen. Hierdurch werden zum einen die Emissionswerte des Brennstoffzellensystems 1 verbessert. Zum anderen wird im Brennstoffzellenabgas Wärme freigesetzt. Durch Nutzung dieser Wärme lässt sich der Wirkungsgrad des Brennstoffzellensystems 1 verbessern. Hierzu weist das Brennstoffzellensystem 1 außerdem einen Wärmeübertrager 33 auf, der im folgenden auch als Hauptwärmeübertrager 33 bezeichnet wird. Der Hauptwärmeübertrager 33 ist einerseits in die Brennstoffzellenabgasleitung 31 stromab des Restgasbrenners 32 und andererseits in die erste Oxidatorleitung 20 eingebunden. Der Hauptwärmeübertrager 33 ermöglich somit eine wärmeübertragende Kopplung zwischen den Abgasen der Brennstoffzelle 2 bzw. des Restgasbrenners 32 und dem der Brennstoffzelle 2 zugeführten Oxidatorgas.

Des Weiteren kann das Brennstoffzellensystem 1 optional mit einem weiteren Wärmeübertrager 34 ausgestattet sein, der im folgenden als Zusatzwärmeübertrager 34 bezeichnet wird. Der Zusatzwärmeübertrager 34 ist einerseits in die Brennstoffzellenabgasleitung 31 stromab des Hauptwärmeübertragers 33 und andererseits in einen Abwärmepfad 35 eingebunden. Der Abwärmepfad 35 dient zur Nutzung von im Abgas der Brennstoffzelle 2 bzw. des Restgasbrenners 32 enthaltener Wärme. Beispielsweise ist der Abwärmepfad 35 durch eine Kühlmittelleitung eines Kühlmittelkreises der Brennkraftmaschine des Kraftfahrzeugs gebildet. Das Brennstoffzellensystem 1 kann dann beispielsweise als Zuheizer für die Brennkraftmaschine genutzt werden. Alternativ kann der Abwärmepfad 35 durch eine Warmluftleitung einer Innenheizeinrichtung des Fahrzeugs gebildet sein. Das Brennstoffzellensystem 1 lässt sich dann als Standheizung für das Fahrzeug verwenden, wenn ein Gebläse der Innenraumheizeinrichtung einen der Verbraucher 9 bildet. Alternativ kann der Abwärmepfad 35 auch durch die zweite Oxidatorleitung 21 gebildet sein, wodurch es möglich ist, auch das dem Reformer 3 zugeführte Oxidatorgas vorzuwärmen.

Des Weiteren kann das Brennstoffzellensystem 1 optional mit einem Rezirkulationswärmeübertrager 36 ausgestattet sein. Dieser ist einerseits in die erste Oxidatorleitung 20 stromauf des Hauptwärmeübertragers 33 und andererseits in eine Rückführleitung 37 eingebunden. Die Rückführleitung 37 ist über eine Anschlussstelle 38 an die Anodenabgasleitung 29 und über den Anodenabgaseingang 14 an den Reformer 3 angeschlossen. Die Rückführleitung 37 ermöglicht eine Rückführung von Anodenabgas über den Rezirkulationswärmeübertrager 36 in den Reformer 3. Die im rückgeführten Anodenabgas mitgeführte Wärme wird hierbei zur Vorwärmung des der Brennstoffzelle 2 zugeführten Oxidatorgases genutzt. In der Rückführleitung 37 kann zwischen dem Rezirkulationswärmeübertrager 36 und dem Reformer 3 ein Gebläse 39 zum Antreiben des Anodenabgases enthalten sein. Alternativ kann der Rezirkulationswärmeübertrager 36 einerseits in die zweite Oxidatorleitung 21 und andererseits in die Rückführleitung 37 eingebunden sein.

Das hier gezeigte Brennstoffzellensystem 1 weist außerdem eine thermisch isolierende Isolationsbox 40 auf, die hier durch eine unterbrochene Linie angedeutet ist. Innerhalb der Isolationsbox 40 sind die besonders heißen Komponenten des Brennstoffzellensystems 1 angeordnet. In jedem Fall sind im Inneren der Isolationsbox 40 die Brennstoffzelle 2, der Restgasbrenner 32 und der Hauptwärmeübertrager 33 angeordnet. Im gezeigten Beispiel sind außerdem der Reformer 3 und der Rezirkulationswärmeübertrager 36 innerhalb der Isolationsbox 40 angeordnet. Bei anderen Ausführungsformen können der Rezirkulationswärmeübertrager 36 und/oder der Reformer 3 außerhalb der Isolationsbox 40 angeordnet sein.

Das Brennstoffzellensystem 1 kann außerdem eine Steuerung 41 sowie eine Sensorik 42 aufweisen. Die Sensorik 42 ist im vorliegenden Fall durch mehrere Temperatursensoren 43 gebildet, die an geeigneten Messstellen angeordnet sind. Beispielsweise befindet sich ein Temperatursensor 43 zwischen dem Gemischbildungsabschnitt 10 und dem Katalysatorabschnitt 11 des Reformers 3. Ein weiterer Temperatursensor 43 ist am Brenngasausgang 17 angeordnet. Ein Temperatursensor 43 ist außerdem am Ausgang des Restgasbrenners 32 angeordnet. Ferner ist hier noch am Anodenausgang 5 ein weiterer Temperatursensor 43 angeordnet. Die Sensorik 42 ermöglicht somit die Messung einer Temperatur der Brennstoffzelle 2, vorzugsweise an deren Anodenseite. Des Weiteren ermöglicht die Sensorik 42 die Messung einer Temperatur des Reformers 3, insbesondere eine Temperatur am Katalysatoreinlass sowie eine Temperatur am Katalysatorauslass. Ebenso kann eine Temperatur am Restgasbrennerauslass ermittelt werden.

Des Weiteren ist das erfindungsgemäße Brennstoffzellensystem 1 mit einer Bypassleitung 44 ausgestattet. Die Bypassleitung 44 ist eingangsseitig bei 45 an die Brenngasleitung 18 und ausgangsseitig bei 46 an die Brennstoffzellenabgasleitung 31 angeschlossen. Die eingangsseitige Anschlussstelle 45 ist dabei möglichst nahe am Brenngasausgang 17 angeordnet, um innerhalb der Brenngasleitung 18 ein möglichst großes Volumen zwischen der eingangsseitigen Anschlussstelle 45 und dem Anodeneingang 4 zu haben. Die ausgangsseitige Anschlussstelle 46 ist im vorliegenden Fall innerhalb der Brennstoffzellenabgasleitung 31 stromab des Zusatzwärmeübertragers 34 angeordnet.

In der Bypassleitung 44 ist ein Bypassventil 47 angeordnet, mit dessen Hilfe durch entsprechende Ansteuerung die Bypassleitung 44 gesperrt und geöffnet werden kann. Das Bypassventil 47 ist vorzugsweise außerhalb der Isolationsbox 40 angeordnet, wodurch es preiswerter realisierbar ist.

Des Weiteren kann in der Brennstoffzellenabgasleitung 31 stromauf der ausgangsseitigen Anschlussstelle 46 ein Abgasventil 48 angeordnet sein, mit dessen Hilfe durch entsprechende Ansteuerung die Brennstoffzellenabgasleitung 31 geöffnet und gesperrt werden kann. Auch die Anordnung des Abgasventils 48 stromab des Zusatzwärmeübertragers 34 ist hier nur exemplarisch. Bevorzugt wird auch hier eine Anordnung außerhalb der Isolationsbox 40.

Bei der in Fig. 1 gezeigten besonderen Ausführungsform ist in der Bypassleitung 44 außerdem ein Oxidationskatalysator 49 angeordnet. Der Oxidationskatalysator 49 ist vorzugsweise innerhalb der Isolationsbox 40 angeordnet. Desweiteren kann die Oxidatorzuführungseinrichtung 19 mit einer dritten Oxidatorleitung 50 ausgestattet sein, die ebenfalls an den Oxidationskatalysator 49 angeschlossen ist. In der dritten Oxidatorleitung 50 ist hier ein Oxidatorventil 51 angeordnet, mit dessen Hilfe die dritte Oxidatorleitung 50 durch entsprechende Ansteuerung geöffnet und gesperrt werden kann. Vorzugsweise ist das Oxidatorventil 51 außerhalb der Isolationsbox 40 angeordnet, wodurch es preiswert baut.

Außerdem kann in der Bypassleitung 44 ein weiterer Wärmeübertrager oder Kühler 52 angeordnet sein, der ebenfalls in einen Abwärmepfad 53 eingebunden ist. Für diesen Abwärmepfad 53 gilt im Grunde dasselbe wie für den Abwärmepfad 35 des Zusatzwärmeübertragers 34. Insbesondere handelt es sich somit beim Abwärmepfad 53 um einen Kühlkreis einer Brennkraftmaschine. Vorzugsweise ist der Kühler 52 in der Bypassleitung 44 stromauf des Bypassventils 47 angeordnet. Auf diese Weise kann effektiv eine Überhitzung des Bypassventils 47 während des Regenerationsprozess vermieden werden.

Die Steuerung 41 ist ausgangsseitig zumindest mit den Ventilen 47, 48, 51 verbunden. Eingangsseitig kann sie an die Sensorik 42 bzw. an deren Temperatursensoren 43 angeschlossen sein. Ausgangsseitig kann sie außerdem an die Oxidatorzuführungseinrichtung 19 bzw. an deren Gebläse 24 und an die Kraftstoffzuführungseinrichtung 25 bzw. an deren Pumpe 27 angeschlossen sein. Des Weiteren ist die Steuerung 41 hier an die Zündeinrichtung 15 und an das Gebläse 39 der Rückführleitung 37 angeschlossen. Die Steuerung 41 ist zum Betreiben des Brennstoffzellensystems 1 bzw. zur Betätigung einzelner Komponenten des Brennstoffzellensystems 1 ausgestaltet. Insbesondere ist die Steuerung 41 softwaremäßig und/oder hardwaremäßig zur Durchführung des im folgenden näher beschriebenen Betriebsverfahrens ausgebildet.

Im normalen Betrieb des Brennstoffzellensystems 1 erreicht die Brennstoffzelle 2, insbesondere wenn sie als Hochtemperatur-Brennstoffzelle ausgestaltet ist, relativ hohe Temperaturen. Auch der Katalysator 16 im Reformer 3 wird vergleichsweise heiß. Gleichzeitig kommt es im Katalysator 16 zu einer Ablagerung von Partikeln, vorzugsweise von Rußpartikeln. Um diese Partikel wieder vom Katalysator 11 entfernen zu können, wird regelmäßig beim Abschalten des Brennstoffzellensystems 1 ein Regenerationsprozess zum Regenerieren des Reformers 3 bzw. des Katalysators 16 durchgeführt. Dieser Regenerationsprozess kann grundsätzlich bei jedem Ausschaltvorgang automatisch aktiviert werden, ebenso ist es möglich, vor der Aktivierung des Regenerationsprozesses vorbestimmte Randbedingungen abzufragen.

Im normalen Betrieb des Brennstoffzellensystems 1 arbeitet der Reformer 3 in einem Brenngaserzeugungsbetrieb, bei dem er aus dem zugeführten Kraftstoff und dem zugeführten Oxidatorgas das wasserstoffhaltige Brenngas generiert. Hierzu sind die Kraftstoffzuführungseinrichtung 25 und die Oxidatorzuführungseinrichtung 19 in Betrieb und versorgen den Reformer 3 mit Kraftstoff bzw. Oxidatorgas. In diesem Brenngaserzeugungsbetrieb ist das Bypassventil 47 zum Sperren der Bypassleitung 44 angesteuert, während das Abgasventil 48 zum Öffnen der Brennstoffzellenabgasleitung 31 angesteuert ist. Das im Reformer 3 erzeugte Brenngas strömt somit zwangsläufig durch die Brennstoffzelle 2. Desweiteren ist das Oxidatorventil 51 zum Sperren der dritten Oxidatorleitung 50 angesteuert.

Zum Ausschalten des Brennstoffzellensystems 1 wird nun zunächst der Brenngaserzeugungsbetrieb des Reformers 3 beendet. Hierzu schaltet beispielsweise die Steuerung 41 die Zufuhr von Oxidatorgas und Kraftstoff ab. In der Folge wird auch kein Brenngas mehr produziert, wodurch auch der Stromerzeugungsprozess der Brennstoffzelle 2 beendet wird. Erst nach Beendigung des Brenngaserzeugungsbetriebs wird ein Regenerationsprozess zur Regeneration des Reformers 3 bzw. Katalysators 16 durchgeführt. Zur Realisierung des Regenerationsprozesses betätigt die Steuerung 41 das Bypassventil 47 zum Öffnen der Bypassleitung 44 und das Abgasventil 48 zum Sperren der Brennstoffzellenabgasleitung 31. In der Folge können Regenerationsprodukte, die während des Regenerationsprozesses aus dem Reformer 3 durch den Brenngasausgang 17 ausströmen über die Bypassleitung 44 unter Umgehung der Brennstoffzelle 2 und hier außerdem unter Umgehung des Restgasbrenners 32 sowie der Wärmeübertrager 33, 34 über die Brennstoffzellenabgasleitung 31 abgeführt werden. Eine Kontaktierung der schädlichen Regenerationsprodukte mit der Anodenseite der Brennstoffzelle 2 kann dadurch effektiv vermieden werden. Das zwischen der eingangsseitigen Anschlussstelle 45 und dem Anodeneingang 4 eingeschlossene restliche Brenngas dient dabei gleichzeitig als isolierender "Puffer", der ebenfalls ein Vordringen der Regenerationsprodukte zur Anodenseite der Brennstoffzelle 2 behindern.

Mit Beginn des Regenerationsprozesses oder vorab kann das Oxidatorventil 51 zum Öffnen der dritten Oxidatorleitung 50 angesteuert werden, um auf diese Weise den Oxidationskatalysator 49 mit Oxidatorgas zu versorgen. Mit Beginn des Regenerationsprozesses wird noch im Gemischbildungsabschnitt 10, im Katalysatorabschnitt 11, in der Brenngasleitung 18 bis zur eingangsseitigen Anschlussstelle 45 und in der Bypassleitung 44 zwischen der eingangsseitigen Anschlussstelle 45 und dem Oxidationskatalysator 45 vorhandenes Brenngas sowie kraftstoffhaltiges Gasgemisch durch den Oxidationskatalysator 49 abgeführt. Durch eine im Oxidationskatalysator 49 ablaufende, entsprechende Oxidationsreaktion lässt sich somit eine Schadstoffemission effektiv verhindern. Zur Unterstützung der Oxidationsreaktion dient der über die dritte Oxidatorleitung 50 zugeführte Oxidator. Auch für die Nachbehandlung der Regenerationsprodukte kann der Oxidationskatalysator 49 vorteilhaft sein. Die Anordnung des Oxidationskatalysators 49 innerhalb der Isolationsbox 40 ist dabei besonders vorteilhaft, da sich der Oxidationskatalysator 49 dadurch während des normalen Betriebs des Brennstoffzellensystems 1 zumindest soweit aufheizt, dass er sich für die gewünschten Oxidationsreaktionen auf einer geeigneten Betriebstemperatur befindet.

Der Regenerationsprozess kann beispielsweise dadurch realisiert werden, dass der Reformer 3 mit Oxidatorgas versorgt wird. Hierzu betätigt die Steuerung 41 z. B. das Gebläse 24, um so Oxidatorgas dem Reformer 3 zuzuführen. Wichtig ist, dass dabei kein Kraftstoff zugeführt wird. Bei hinreichend hoher Temperatur des Katalysators 16 führt die Beaufschlagung des Katalysators 16 mit Oxidator zu einer Abbrandreaktion der Partikelbeladung.

Während des Regenerationsprozesses führt der Abbrand der Partikelbeladung zu einer Temperaturerhöhung im Katalysator 16 und somit im Reformer 3. Eine Temperaturerhöhung in der Brennstoffzelle 2 über die beim Regenerationsprozess gebildeten heißen Verbrennungsprodukte bleibt aus, da ein Kontakt der Verbrennungsprodukte mit der Brennstoffzelle 2 vermieden wird. Gleichzeitig lässt sich dadurch auch eine Reoxidation von Nickel auf der Anodenseite der Brennstoffzelle 2 vermeiden, da die gegebenenfalls sauerstoffhaltigen Regenerationsprodukte nicht zur Brennstoffzelle 2 gelangen.

Während des Regenerationsprozesses wird beispielsweise die Temperatur des Reformers 3 bzw. des Katalysators 16 überwacht. Falls während des Regenerationsprozesses die Temperatur des Katalysators 16 bzw. des Reformers 3 eine vorbestimmte Reformergrenztemperatur T_{R} übersteigt, veranlasst die Steuerung 41 eine Reduzierung, gegebenenfalls bis zur Unterbrechung der Oxidatorzuführung.

Durch das Reduzieren bzw. Ausschalten der Oxidatorversorgung wird der Regenerationsvorgang verlangsamt bzw. unterbrochen, so dass der Reformer 3 bzw. der Katalysator 16 abkühlen können. Sobald die Temperatur des Reformers 3 bzw. des Katalysators 16 unter die Reformergrenztemperatur T_{R} fällt, wird der gebremste bzw. unterbrochene Regenerationsprozess intensiviert bzw. fortgesetzt, das heißt, die Oxidatorzuführung wird wieder erhöht bzw. neu gestartet.

Über die Kontrolle der Temperaturen kann außerdem das Ende des Regenerationsprozesses ermittelt werden. Sobald die Steuerung 41 während des Regenerationsprozesses, also während der Oxidatorgaszuführung zum Reformer 3 eine Abkühlung des Reformers 3 bzw. des Katalysators 16 feststellt, ist klar, dass im Katalysator 16 kein Abbrand mehr erfolgt, so dass die Regeneration des Katalysators 16 beendet ist. In der Folge kann die Steuerung 41 den Regenerationsprozess beenden, also insbesondere die Oxidatorzuführung stoppen.

Bei einer anderen Ausführungsform kann der Regenerationsprozess auch dadurch realisiert werden, dass der Reformer 3 als Brenner betrieben wird. Beim Brennerbetrieb des Reformers 3 werden von der Steuerung 41 die Kraftstoffzuführungseinrichtung 25 und die Oxidatorzuführungseinrichtung 19 so angesteuert, dass im Gemischbildungsabschnitt 10 ein mageres Gemisch gebildet wird, das bei seiner Zündung beispielsweise mittels der Zündeinrichtung 15 zu einer Flamme führt. Mit Hilfe der Flamme kann der Katalysator 16 so weit aufgeheizt werden, dass ein Abbrand der Partikelablagerung erfolgt. Die Durchführung des Regenerationsprozesses mit Hilfe des als Brenner betriebenen Reformers 3 ist beispielsweise dann vorteilhaft, wenn der Katalysator 16 bzw. der Reformer 3 vor Beginn des Regenerationsprozesses bereits so weit abkühlt, dass die Zuführung von Oxidatorgas alleine keinen Abbrand der Partikelablagerung ermöglicht.

Auch hier kann vorgesehen sein, den Brennerbetrieb des Reformers 3 zu reduzieren bzw. zu unterbrechen, sobald und solange sich der Reformer 3 bzw. der Katalysator 16 über die Reformergrenztemperatur T_{R} aufheizt. Die jeweilige Reduzierung bzw. Unterbrechung wird dann wieder beendet und der Brennerbetrieb des Reformers 3 intensiviert bzw. erneut gestartet, wenn die Temperatur im Reformer 3 bzw. im Katalysator 16 wieder unter die vorbestimmte Reformergrenztemperatur T_{R} fällt.

## Patentansprüche

1. Brennstoffzellensystem, insbesondere für ein Kraftfahrzeug,
- mit einer Brennstoffzelle (2) zur Stromerzeugung aus Oxidatorgas und Brenngas, die einen Anodeneingang (4), einen Anodenausgang (5), einen Kathodeneingang (6), einen Kathodenausgang (7) und wenigstens einen Stromanschluss (8) aufweist,
- mit einem Reformer (3) zur Brenngaserzeugung aus Oxidatorgas und Kraftstoff, der einen Oxidatoreingang (13), einen Kraftstoffeingang (12) und einen Brenngasausgang (17) aufweist,
- mit einer Brenngasleitung (18), die den Brenngasausgang (17) mit dem Anodeneingang (4) verbindet,
- mit einer Brennstoffzellenabgasleitung (31), die über eine Anodenabgasleitung (29) an den Anodenausgang (5) und über eine Kathodenabgasleitung (28) an den Kathodenausgang (7) angeschlossen ist,
- mit einer Bypassleitung (44), die einerseits mit der Brenngasleitung (18) und andererseits mit der Brennstoffzellenabgasleitung (31) verbunden ist,
- mit einem Restgasbrenner (32) der in der Brennstoffzellenabgasleitung (31) angeordnet ist,
- mit einem Hauptwärmeübertrager (33) der in der Brennstoffzellenabgasleitung (31) stromab des Restgasbrenners (32) angeordnet ist,
**dadurch gekennzeichnet,**
**dass** die Bypassleitung (44) stromab des Hauptwärmeübertragers (33) an die Brennstoffzellenabgasleitung (31) angeschlossen ist.

2. Brennstoffzellensystem nach Anspruch 1,
**dadurch gekennzeichnet,**
**dass** in der Bypassleitung (44) ein Bypassventil (47) angeordnet ist, das zum Öffnen und Sperren der Bypassleitung (44) ansteuerbar ist.

3. Brennstoffzellensystem nach Anspruch 1 oder 2,
**dadurch gekennzeichnet,**
**dass** in der Brennstoffzellenabgasleitung (31) stromauf einer ausgangsseitigen Anschlussstelle (46) der Bypassleitung (44) ein Abgasventil (48) angeordnet ist, das zum Öffnen und Sperren der Brennstoffzellenabgasleitung (31) ansteuerbar ist.

4. Brennstoffzellensystem nach Anspruch 2 oder 3,
**dadurch gekennzeichnet,**
- **dass** eine Steuerung (41) vorgesehen ist, die so ausgestaltet ist, dass sie beim Ausschalten des Brennstoffzellensystems (1) einen Regenerationsprozess zum Regenerieren des Reformers (3) oder eines zur Brenngaserzeugung aus Oxidatorgas und Kraftstoff im Reformer (3) angeordneten Katalysators (16) durchführt, und/oder
- **dass** die Steuerung (41) so ausgestaltet ist, dass sie das Bypassventil (44) für einen Brenngaserzeugungsbetrieb des Reformers (3) zum Sperren der Bypassleitung (44) und für den Regenerationsprozess zum Öffnen der Bypassleitung (44) ansteuert und/oder dass sie das Abgasventil (48) für einen Brenngaserzeugungsbetrieb des Reformers (3) zum Öffnen der Brennstoffzellenabgasleitung (31) und für den Regenerationsprozess zum Sperren der Brennstoffzellenabgasleitung (31) ansteuert.

5. Brennstoffzellensystem nach einem der Ansprüche 1 bis 4,
**dadurch gekennzeichnet,**
**dass** in der Brennstoffzellenabgasleitung (31) stromab des Hauptwärmeübertragers (33) ein Zusatzwärmeübertrager (34) angeordnet ist, wobei die Bypassleitung (44) stromauf oder stromab des Zusatzwärmeübertragers (34) an die Brennstoffzellenabgasleitung (31) angeschlossen ist.

6. Brennstoffzellensystem nach einem der Ansprüche 1 bis 5,
**dadurch gekennzeichnet,**
- **dass** in der Bypassleitung (44) ein Oxidationskatalysator (49) angeordnet ist, und/oder
- **dass** an den Oxidationskatalysator (49) eine dritte Oxidatorleitung (59) angeschlossen ist, und/oder
- **dass** der Oxidationskatalysator (49) in der Bypassleitung (44) stromauf des Bypassventils (47) angeordnet ist, und/oder
- **dass** in der dritten Oxidationsleitung (50) ein Oxidatorventil (51) angeordnet ist.

7. Brennstoffzellensystem nach einem der Ansprüche 1 bis 6,
**dadurch gekennzeichnet,**
- **dass** zumindest die Brennstoffzelle (2) innerhalb einer thermisch isolierenden Isolationsbox (40) angeordnet ist, wobei die Bypassleitung (44) außerhalb der Isolationsbox (40) an die Brennstoffzellenabgasleitung (31) angeschlossen ist, und/oder
- **dass** das Bypassventil (44) außerhalb der Isolationsbox (40) angeordnet ist, und/oder
- **dass** das Abgasventil (48) außerhalb der Isolationsbox (40) angeordnet ist, und/oder
- **dass** das Oxidatorventil (51) außerhalb der Isolationsbox (40) angeordnet ist, und/oder
- **dass** der Oxidationskatalysator (49) innerhalb der Isolationsbox (40) angeordnet ist.

8. Verfahren zum Ausschalten eines Brennstoffzellensystems (1) nach einem der Ansprüche 1 bis 7,
- bei dem ein Brenngaserzeugungsbetrieb des Reformers (3), bei dem eine aus dem Brenngasausgang (17) austretende Strömung durch die Brennstoffzelle (2) geführt wird, beendet wird,
- bei dem nach dem Beenden des Brenngaserzeugungsbetriebs ein Regenerationsprozess zum Regenerieren des Reformers (3) oder eines zur Brenngaserzeugung aus Oxidatorgas und Kraftstoff im Reformer (3) angeordneten Katalysators (16) durchgeführt wird,
- bei dem zur Durchführung des Regenerationsprozesses eine aus dem Brenngasausgang (17) austretende Strömung durch die Bypassleitung (44) geführt wird.

9. Verfahren nach Anspruch 8,
**dadurch gekennzeichnet,**
- **dass** zur Durchführung des Brenngaserzeugungsbetriebs die Bypassleitung (44) gesperrt wird, und/oder
- **dass** zur Durchführung des Regenerationsprozesses die Bypassleitung (44) geöffnet wird, und/oder
- **dass** zur Durchführung des Brenngaserzeugungsbetriebs die Brennstoffzellenabgasleitung (31) geöffnet wird, und/oder
- **dass** zur Durchführung des Regenerationsprozesses die Brennstoffzellenabgasleitung (31) gesperrt wird, und/oder
- **dass** zur Durchführung des Brenngaserzeugungsbetriebs die dritte Oxidatorleitung (50) gesperrt wird, und/oder
- **dass** zur Durchführung des Regenerationsprozess die dritte Oxidatorleitung (50) geöffnet wird.

10. Verfahren nach Anspruch 8 oder 9,
**dadurch gekennzeichnet,**
- **dass** der Reformer (3) während des Regenerationsprozesses mit Oxidatorgas versorgt wird, und/oder
- **dass** die Oxidatorgasversorgung des Reformers (3) während des Regenerationsprozesses beendet oder reduziert wird, sobald sich der Reformer (3) über eine vorbestimmte Reformergrenztemperatur (T_{R}) aufheizt, und/oder
- **dass** die Oxidatorgasversorgung des Reformers (3) während des Regenerationsprozesses erhöht oder erneut gestartet wird, sobald der Reformer (3) unter die Reformergrenztemperatur (T_{R}) abgekühlt ist, und/oder
- **dass** der Regenerationsprozess beendet wird, sobald die Oxidatorgasversorgung des Reformers (3) zur einer Abkühlung des Reformers (3) führt.

11. Verfahren nach Anspruch 8 oder 9,
**dadurch gekennzeichnet,**
- **dass** der Reformer (3) während des Regenerationsprozesses als Brenner betrieben wird, und/oder
- **dass** während des Regenerationsprozesses der Brennerbetrieb des Reformers (3) reduziert oder beendet wird, sobald sich der Reformer (3) über eine vorbestimmte Reformergrenztemperatur (T_{R}) aufheizt, und/oder
- **dass** während des Regenerationsprozesses der Brennerbetrieb des Reformers (3) erhöht oder erneut gestartet wird, sobald der Reformer (3) unter die Reformergrenztemperatur (T_{R}) abgekühlt ist.

## Claims

1. A fuel cell system, more preferably for a motor vehicle,
- with a fuel cell (2) for the power generation from oxidant gas and fuel gas having an anode inlet (4), an anode outlet (5), a cathode inlet (6), a cathode outlet (7) and at least one power connection (8),
- with a reformer (3) for the fuel gas generation from oxidant gas and fuel having an oxidant inlet (13), a fuel inlet (12) and a fuel gas outlet (17),
- with a fuel gas line (18) which connects the fuel gas outlet (17) with the anode inlet (4),
- with a fuel cell exhaust line (31) which via an anode waste gas line (29) is connected to the anode outlet (5) and via a cathode waste gas line (28) is connected to the cathode outlet (7),
- with a bypass line (44) which on the one hand is connected to the fuel gas line (18) and on the other hand to the fuel cell exhaust line (31),
- with a residual gas burner (32) which is arranged in the fuel cell exhaust line (31),
- with a main heat transfer device (33) which is arranged in the fuel cell exhaust line (31) upstream of the residual gas burner (32),
- **characterized in that** the bypass line (44) upstream of the main heat transfer device (33) is connected to the fuel cell exhaust line (31).

2. The fuel cell system according to Claim 1, **characterized in that** in the bypass line (44) a bypass valve (47) is arranged which can be activated for opening and shutting off the bypass line (44).

3. The fuel cell system according to Claim 1 or 2, **characterized in that** in the fuel cell exhaust line (31) upstream of a connecting point (46) of the bypass line (44) on the outlet side an exhaust valve (48) is arranged which can be activated for opening and shutting off the fuel cell exhaust line (31).

4. The fuel cell system according to Claim 2 or 3, **characterized**
- **in that** a control (41) is provided which is designed so that on switching-off of the fuel cell system (1) it carries out a regeneration process for the regeneration of the reformer (3) or a catalytic converter (16) arranged in the reformer (3) for the fuel gas generation from oxidant gas and fuel, and/or
- **in that** the control (41) is designed so that it activates the bypass valve (44) for a fuel gas generation operation of the reformer (3) for the shutting-off of the bypass line (44) and for the regeneration process for the opening of the bypass line (44) and/or in that it activates the exhaust valve (48) for a fuel gas generation operation of the reformer (3) for the opening of the fuel cell exhaust line (31) and for the regeneration process for the shutting-off of the fuel cell exhaust line (31).

5. The fuel cell system according to any one of the Claims 1 to 4, **characterized in that** in the fuel cell exhaust line (31) downstream of the main heat transfer device (31) an additional heat transfer device (34) is arranged, wherein the bypass line (44) is connected to the fuel cell exhaust line (31) upstream or downstream of the additional heat transfer device (34).

6. The fuel cell system according to any one of the Claims 1 to 5, **characterized**
- **in that** in the bypass line (44) an oxidation catalytic converter (49) is arranged, and/or
- **in that** a third oxidant line (59) is connected to the oxidation catalytic converter (49) and/or
- **in that** the oxidant catalytic converter (49) is arranged in the bypass line (44) upstream of the bypass valve (47), and/or
- **in that** in the third oxidant line (50) an oxidant valve (51) is arranged.

7. The fuel cell system according to any one of the Claims 1 to 6, **characterized**
- **in that** at least the fuel cell (2) is arranged within a thermally insulating insulation box (40), wherein the bypass line (44) is connected to the fuel cell exhaust line (31) outside the insulation box (40) and/or
- **in that** the bypass valve (44) is arranged outside the insulation box (40) and/or
- **in that** the exhaust valve (48) is arranged outside the insulation box (40) and/or
- **in that** the oxidant valve (51) is arranged outside the insulation box (40) and/or
- **in that** the oxidation catalytic converter (49) is arranged within the insulation box (40).

8. A method for switching off a fuel cell system (1) according to any one of the Claims 1 to 7,
- wherein a fuel gas generation operation of the reformer (3), wherein a flow issuing from the fuel gas outlet (17) is guided through the fuel cell (2), is terminated,
- wherein after the termination of the fuel gas generation operation a regeneration process for regenerating the reformer (3) or a catalytic converter (16) arranged in the reformer (3) for the fuel gas generation from oxidant gas and fuel is carried out,
- wherein for carrying out the regeneration process a flow issuing from the fuel gas outlet (17) is guided through the bypass line (44).

9. The method according to Claim 8, **characterized**
- **in that** for carrying out the fuel gas generation operation the bypass line (44) is shut off and/or
- **in that** for carrying out the regeneration process the bypass line (44) is opened and/or
- **in that** for carrying out the fuel gas generation operation the fuel cell exhaust line (31) is opened and/or
- **in that** for carrying out the regeneration process the fuel cell exhaust line (31) is shut off and/or
- **in that** for carrying out the fuel gas generation operation the third oxidant line (50) is shut off and/or
- **in that** for carrying out the regeneration process the third oxidant line (50) is opened.

10. The method according to Claim 8 or 9, **characterized**
- **in that** the reformer (3) during the regeneration process is supplied with oxidant gas and/or
- **in that** the oxidant gas supply of the reformer (3) during the regeneration process is terminated or reduced as soon as the reformer (3) is heated above a predetermined reformer limit temperature (T_{R}) and/or
- **in that** the oxidant gas supply of the reformer (3) during the regeneration process is increased or restarted as soon as the reformer (3) cools down to below the reformer limit temperature (T_{R}) and/or
- **in that** the regeneration process is terminated as soon as the oxidant gas supply of the reformer (3) leads to a cooling-down of the reformer (3).

11. The method according to Claim 8 or 9, **characterized**
- **in that** the reformer (3) during the regeneration process is operated as burner and/or
- **in that** during the regeneration process the burner operation of the reformer (3) is reduced or terminated as soon as the reformer (3) is heated above a predetermined reformer limit temperature (T_{R}) and/or
- **in that** during the regeneration process the burner operation of the reformer (3) is increased or restarted as soon as the reformer (3) has cooled down to below the reformer limit temperature (T_{R}).

## Revendications

1. Système de cellules de combustible, en particulier pour un véhicule automobile, comprenant,
- une cellule de combustible (2) pour la production de courant à partir de gaz oxydant et de gaz combustible, qui présente une entrée d'anode (4), une sortie d'anode (5), une entrée de cathode (6), une sortie de cathode (7) et au moins un branchement électrique (8),
- un reformeur (3) pour la production de gaz combustible à partir de gaz oxydant et du carburant, qui présente une entrée d'oxydant (13), une entrée de carburant (12) et une sortie de gaz combustible (17),
- une conduite de gaz combustible (18), qui relie la sortie de gaz combustible (17) à l'entrée d'anode (4),
- une conduite de gaz brûlé de cellule de combustible (31), qui est raccordée par une conduite de gaz brûlé d'anode (29) à la sortie d'anode (5) et par une conduite de gaz brûlé de cathode (28) à la sortie de cathode (7),
- une conduite de dérivation (44), qui est reliée d'une part à la conduite de gaz combustible (18) et d'autre part à la conduite de gaz brûlé de cellules de combustible (31),
- un brûleur de gaz résiduel (32) qui est disposé dans la conduite de gaz brûlé de cellules de combustible (31),
- un échangeur de chaleur principal (33) qui est disposé dans la conduite de gaz brûlé de cellules de combustible (31) en aval du brûleur de gaz résiduel (32),
**caractérisé en ce que**
la conduite de dérivation (44) est raccordée en aval de l'échangeur de chaleur principal (33) à la conduite de gaz brûlé de cellule de combustible (31).

2. Système de cellule de combustible selon la revendication 1,
**caractérisé en ce que**
dans la conduite de dérivation (44) est disposée une soupape de dérivation (47) qui peut être actionnée pour l'ouverture et la fermeture de la conduite de dérivation (44).

3. Système de cellules de combustible selon la revendication 1 ou 2,
**caractérisé en ce que**
dans la conduite de gaz brûlé de cellules de combustible (31) est disposée en aval d'un point de raccordement (46) côté sortie de la conduite de dérivation (44) une soupape de gaz brûlé (48), qui peut être actionnée pour l'ouverture et la fermeture de la conduite de gaz brûlé de cellules de combustible (31).

4. Système de cellules de combustible selon la revendication 2 ou 3,
**caractérisé en ce que**
- il est prévu une commande (41) qui est conçue de telle sorte que, lors de la mise hors marche du système de cellules de combustible (1), elle effectue un processus de régénération pour la régénération du reformeur (3) ou d'un catalyseur (16) disposé dans le reformeur (3) pour la production de gaz combustible à partir de gaz oxydant et de carburant, et/ou
- la commande (41) est conçue de telle sorte qu'elle actionne la soupape de dérivation (44) pour un mode de production de gaz combustible du reformeur (3) pour le blocage de la conduite de dérivation (44) et pour le processus de régénération pour l'ouverture de la conduite de dérivation (44) et/ou **en ce qu'**elle actionne la soupape de gaz brûlé (48) pour un mode de production de gaz combustible du reformeur (3) pour l'ouverture de la conduite de gaz brûlé de cellules de combustion (31) et pour le processus de régénération pour le blocage de la conduite de gaz brûlé de cellule de combustible (31).

5. Système de cellules de combustible selon l'une quelconque des revendications 1 à 4,
**caractérisé en ce que**
un échangeur de chaleur supplémentaire (34) est disposé dans la conduite de gaz brûlé de cellules de combustible (31) en aval de l'échangeur de chaleur principal (33), la conduite de dérivation (44) étant raccordée en aval de l'échangeur de chaleur supplémentaire (34) à la conduite de gaz brûlé de cellules de combustible (31).

6. Système de cellules de combustible selon l'une quelconque des revendications 1 à 5,
**caractérisé en ce que**
- un catalyseur d'oxydation (49) est disposé dans la conduite de dérivation (44), et/ou
- une troisième conduite d'oxydant (59) est raccordée au catalyseur d'oxydation (49), et/ou
- le catalyseur d'oxydation (49) est disposé dans la conduite de dérivation (44) en aval de la soupape de dérivation (47), et/ou
- une soupape d'oxydant (51) est disposée dans la troisième conduite d'oxydation (50).

7. Système de cellules de combustible selon l'une quelconque des revendications 1 à 6,
**caractérisé en ce que**
- au moins la cellule de combustible (2) est disposée à l'intérieur d'un boîtier d'isolation (40) thermiquement isolant, la conduite de dérivation (44) étant raccordée à l'extérieur du boîtier d'isolation (40) à la conduite de gaz brûlé de cellules de combustible (31), et/ou
- la soupape de dérivation (44) est disposée à l'extérieur du boîtier d'isolation (40), et/ou
- la soupape de gaz brûlé (48) est disposée à l'extérieur du boîtier d'isolation (40), et/ou
- la soupape d'oxydant (51) est disposée à l'extérieur du boîtier d'isolation (40), et/ou
- **en ce que** le catalyseur d'oxydation (49) est disposé à l'intérieur du boîtier d'isolation (40).

8. Procédé pour la mise hors marche d'un système de cellules de combustible (1) selon l'une quelconque des revendications 1 à 7,
- dans lequel un mode de production de gaz combustible du reformeur (3), dans lequel un écoulement sortant de la sortie de gaz combustible (17) est guidé par la cellule de combustible (2), est terminé,
- dans lequel, après la fin du mode de production de gaz combustible, un processus de régénération est effectué pour régénérer le reformeur (3) ou un catalyseur (16) disposé dans le reformeur (3) pour la production de gaz combustible à partir de gaz oxydant et de carburant,
- dans lequel, pour mettre en oeuvre le processus de régénération, un écoulement sortant de la sortie du gaz combustible (17) est guidé à travers la conduite de dérivation (44).

9. Procédé selon la revendication 8,
**Caractérisé en ce que**
- la conduite de dérivation (44) est bloquée pour réaliser le mode de production du gaz combustible, et/ou
- la conduite de dérivation (44) est ouverte pour réaliser le processus de régénération, et/ou
- la conduite de gaz brûlé de cellules de combustible (31) est ouverte pour réaliser le mode de production de gaz combustible, et/ou
- la conduite de gaz brûlé de cellules de combustible (31) est fermée pour réaliser le processus de régénération, et/ou
- la troisième conduite d'oxydant (50) est fermée pour réaliser le mode de production de gaz combustible, et/ou
- la troisième conduite d'oxydant (50) est ouverte pour réaliser le processus de régénération.

10. Procédé selon la revendication 8 ou 9,
**caractérisé en ce que**
- le reformeur (3) est alimenté en gaz oxydant pendant le processus de régénération, et/ou
- l'alimentation en gaz oxydant du reformeur (3) est terminée ou réduite pendant le processus de régénération dès que le reformeur (3) chauffe au-delà d'une température limite de reformeur (T_{R}) prédéfinie, et/ou
- l'alimentation en gaz oxydant du reformeur (3) est augmentée ou redémarrée pendant le processus de régénération dès que le reformeur (3) est refroidi au-dessous de la température limite de reformeur (T_{R}), et/ou
- le processus de régénération est terminé dès que l'alimentation en gaz oxydant du reformeur (3) entraîne un refroidissement du reformeur (3).

11. Procédé selon la revendication 8 ou 9,
**caractérisé en ce que**
- le reformeur (3) est exploité pendant le processus de régénération comme brûleur, et/ou,
- pendant le processus de régénération, le mode brûleur du reformeur (3) est réduit ou terminé dès que le reformeur (3) chauffe au-delà d'une température limite de reformeur (T_{R}) prédéfinie, et/ou
- pendant le processus de régénération, le fonctionnement du brûleur du reformeur (3) est augmenté ou démarré à nouveau dès que le reformeur (3) est refroidi au-dessous de la température limite du reformeur (T_{R}).
